# EUROPÄISCHE PATENTSCHRIFT

(11) **EP 0 874 746 B1**
(45) Veröffentlichungstag und Bekanntmachung des Hinweises auf die Patenterteilung: **17.05.2000**
(21) Anmeldenummer: 96943929.8
(22) Anmeldetag: 12.12.1996
(51) Int. Cl.: B60T 8/00

(54) **VERFAHREN ZUR VERBESSERUNG DES REGELVERHALTENS EINES ABS IN EINER OFF-ROAD-FAHRSITUATION**
METHOD FOR IMPROVING THE REGULATION BEHAVIOUR OF AN ABS SYSTEM IN OFF-THE-ROAD DRIVING
PROCEDE PERMETTANT D'AMELIORER LE COMPORTEMENT DE REGULATION D'UN SYSTEME ANTIBLOCAGE DANS DES SITUATIONS DE CONDUITE HORS-ROUTE

(30) Priorität: 17.01.1996 DE 19601529
(43) Veröffentlichungstag der Anmeldung: 04.11.1998
(73) Patentinhaber: Continental Teves AG & Co. oHG, 60488 Frankfurt (DE)
(72) Erfinder: GRONAU, Ralph, D-35083 Wetter (DE); BUSCHMANN, Gunther, D-65510 Idstein (DE)
(86) Internationale Anmeldenummer: EP9605557
(87) Internationale Veröffentlichungsnummer: WO9726164

(56) Entgegenhaltungen:
- EP-A- 0 425 810
- EP-A- 0 475 010
- DE-A- 3 421 253
- FR-A- 2 565 169
- FR-A- 2 565 181

## Beschreibung

Die Erfindung bezieht sich auf ein Verfahren der im Oberbegriff des Anspruches 1 beschriebenen Art, wie z.B. Dokument EP-A-0 475 010, das für übliche Kraftfahrzeuge, ganz besonders aber auch für geländegängige Fahrzeuge und Fahrzeuge mit Allradantrieb, geeignet ist.

Bei Fahrzeugen der mittleren und höheren Preisklasse gehören heutzutage Blockierschutzregelungssysteme zu den Standardausrüstungen. Kleinere und preiswertere Fahrzeuge werden in zunehmendem Maße in diesen Kreis einbezogen. Die Vorzüge einer Blokkierschutzregelung sind unbestritten, obwohl es Ausnahmesituationen gibt, in denen durch eine Blockierschutzregelung der Bremsweg länger als bei einem Bremsvorgang mit blockierten Rädern werden kann.

Von besonderer Bedeutung sind solche Ausnahme-Fahrsituationen bei Off-Road-Fahrbedingungen bzw. für geländegängige Fahrzeuge, deren Bremsleistung auf Kies, Schotter und ähnlichem zu Beanstandungen Anlaß gibt. Auf solchen Fahrbahnbelägen ist die Bremsleistung eines blockierten Rades relativ hoch, weshalb eine Blockierschutzregelung eine Verlängerung des Bremsweges zur Folge haben kann. Es ist daher bereits bekannt, bei solchen geländegängigen Fahrzeugen eine Abschaltmöglichkeit für das Blockierschutz-Regelungssystem vorzusehen, um die maximal mögliche Verzögerung im Off-Road-Betrieb zu erzielen.

Eine solche Abschaltmöglichkeit ist natürlich bedenklich, weil sie Fehlbedienung ermöglicht. Außerdem ist auch im Gelände das Fahrzeug, wenn beide Vorderräder blockieren, nicht mehr lenkbar; das Blockieren der Hinterräder ist bekanntlich für die Fahrstabilität kritisch.

Es wurde auch schon vorgeschlagen, bei geländegängigen Fahrzeugen im Off-Road-Betrieb einen Sonderregelungsmodus zu aktivieren, der bewirkt, daß erst nach dem Blockieren jeweils eines Rades einer Achse die Blockierschutz-Regelung für das zweite Rad der Achse zugelassen wird.

Der Erfindung liegt nun die Aufgabe zugrunde, ein Verfahren zur Verbesserung des Regelverhaltens eines Blockierschutzregelungssystems in einer Off-Road-Fahrsituation zu entwickeln, das sich sowohl auf den Bremsweg in einer solchen Situation als auch auf die Lenkfähigkeit und Fahrstabilität günstig auswirkt.

Es hat sich herausgestellt, daß diese Aufgabe durch das in Anspruch 1 beschriebene Verfahren gelöst werden kann, dessen Besonderheit darin besteht, daß im Sonderregelungsmodus in der Radbremse des Rades, das als erstes die vorgegebenen Normal-regelungsschwellen überschreitet, abweichend von dem Normalregelungsmodus ein Bremsdruckabbau unterbunden und der Bremsdruck an diesem Rad solange konstant gehalten wird, bis eine Wiederbeschleunigung dieses Rades einsetzt; bei der Wiederbeschleunigung des Rades wird dann eine Bremsdruckerhöhung zugelassen,und es wird beim Erreichen der Normalregelungsschwellen der Sonderregelungsmodus für dieses Rad beendet. Außerdem wird dafür gesorgt, daß grundsätzlich zur gleichen Zeit nur für ein Rad einer Achse die Sonderregelung zugelassen wird, während für das andere Rad der Achse der Normalregelungsmodus gilt.

Nach einem vorteilhaften Ausführungsbeispiel des erfindungsgemäßen Verfahrens werden als Eintrittsbedingungen für die Aktivierung der Sonderregelung nach dem Einlaufen eines Rades in die Normalregelung bzw. nach dem Überschreiten der Normal-regelungsschwellen das Vorliegen von Bremsschlupf und eine ansteigende oder gleichbleibende Radverzögerung vorgegeben.

Bei höheren Fahrzeuggeschwindigkeiten hat grundsätzlich der Erhalt der Fahrstabilität und Lenkfähigkeit Vorrang. Nach einem weiteren Ausführungsbeispiel der Erfindung ist daher vorgesehen, daß der Sonderregelungmodus nur bei einer unter einem vorgegebenen Grenzwert liegenden Fahrzeuggeschwindigkeit oder Fahrzeug-Referenzgeschwindigkeit zugelassen wird. Es ist auch möglich und kann auch zweckmäßig sein, grundsätzlich den Sonderregelungsmodus unterhalb dieses Geschwindigkeits-Grenzwertes freizugeben, bei höherer Geschwindigkeit dagegen zu unterbinden.

Das Vorliegen einer Off-Road-Fahrsituation wird nach einem vorteilhaften Ausführungsbeispiel der Erfindung durch Auswerten von Fahrwerksschwingungen, Radschwingungen usw., die für einen Geländebetrieb typisch sind, selbsttätig "erkannt". Andererseits ist es auch möglich, in dem Fahrzeug einen Schalter vorzusehen, der manuell betätigt werden kann, um dem Regelungssystem das Vorliegen einer Off-Road-Fahrsituation zu signalisieren und dadurch den Sonderregelungsmodus zuzulassen. Diese und andere Ausführungsbeispiele der Erfindung sind in den Unteransprüchen beschrieben.

Weitere Einzelheiten der Erfindung gehen aus der folgenden Beschreibung eines Ausführungsbeispiels anhand der beigefügten Abbildungen hervor.

Es zeigen
- Fig. 1: als Blockschaltbild oder Funktionsbild die wesentlichen elektronischen Komponenten einer Schaltungsanordnung zur Durchführung des erfindungsgemäßen Verfahrens und
- Fig.2: im Diagramm den Geschwindigkeitsverlauf des Fahrzeugs und der beiden Räder einer Achse in einer Situation, in der das erfindungsgemäße Verfahren die Regelung beeinflußt.

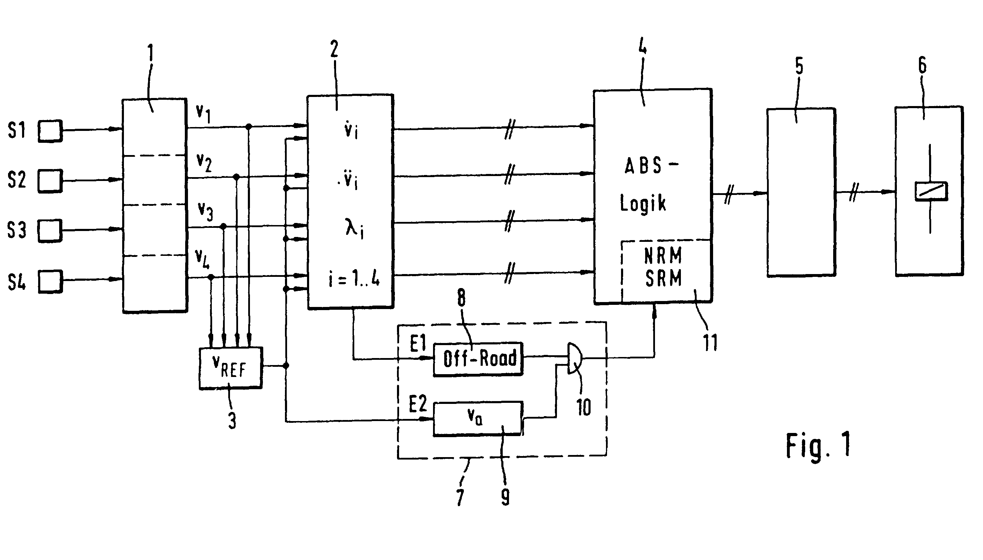

Die Schaltungsanordnung nach Fig. 1 ist für ein geländegängiges Fahrzeug vorgesehen und dient zur Blockierschutzregelung.

Die wichtigste Eingangsgröße eines solchen Regelungssystems stellt das Raddrehverhalten dar, das mit Hilfe von Radsensoren S1 bis S4 gemessen wird. Aus den Sensorsignalen werden in einer Aufbereitungsschaltung 1 Signale oder Daten abgeleitet, welche die Geschwindigkeit in v_{**1**} bis v_{**4**} der einzelnen Fahrzeugräder und das Drehverhalten dieser Räder wiedergeben.

In einer Auswerteschaltung 2 werden die Geschwindigkeitssignale v_{**1**} bis v_{**4**} errechnet, wobei vor allem die Änderung der Radgeschwindigkeit, nämlich die Radverzögerungen und -beschleunigungen v_{**1**} bis v_{**4**}, die zeitlichen Änderungen dieser Größen, der sogenannte Ruck, und der Radschlupf λ_{**1**} bis λ_{**4**} interessieren.

Zur Errechnung des Radschlupfes wird üblicherweise eine Fahrzeug-Referenzgeschwindigkeit V_{REF} herangezogen, die durch logische Verknüpfung der einzelnen Radgeschwindigkeiten v_{**1**} bis v_{**4**} entsteht und die näherungsweise die Fahrzeuggeschwindigkeit wiedergibt.

In einem symbolisch als ABS-Logik dargestellten Schaltkreis 4 werden durch Datenverarbeitung auf Basis komplexer Algorithmen und durch Auswertung aller zur Verfügung stehenden Informationen aus den radindividuellen Meßwerten und den abgeleiteten Größen (Verzögerung, Beschleunigung, Ruck, Schlupf, Referenz-Geschwindigkeit usw.) Bremsdrucksteuersignale gewonnen, die über eine Ventilansteuerung 5 einem Schaltblock 6 zugeführt werden.
Der Schaltblock 6 repräsentiert Bremsdruckaktuatoren, z.B. elektromagnetisch betätigbare Hydraulikventile. Bei bekannten Antiblockiersystemen ist jedem Fahrzeugrad ein elektromagnetisch steuerbares Einlaß- und ein Auslaßventil zugeordnet. Mit diesen Ventilen oder Ventilpaaren in Verbindung mit einem Hilfsdruckversorgungssystem oder einer hydraulischen Rückförderpumpe wird der Bremsdruck in den Radbremsen der einzelnen Fahrzeugräder auf den von dem Regelungssystem in Abhängigkeit von dem Raddrehverhalten errechneten Wert eingestellt.

Eine ABS-Schaltungsanordnung der dargestellten Art kann natürlich auch mit Hilfe von programmgesteuerten Schaltkreisen, wie Mikrocomputer, Mikrocontroller oder dergleichen, verwirklicht werden; dieser Realisierungsweg wird heutzutage sogar bevorzugt.

Die abgebildete Schaltungsanordnung enthält außerdem eine Zusatzschaltung 7, die Bausteine oder Schaltkreise enthält oder Programmschritte symbolisiert, die zur Durchführung des erfindungsgemäßen Verfahrens erforderlich sind. Diese Zusatzschaltung 7 besteht im wesentlichen aus zwei Erkennungsschaltungen 8 und 9 und aus einer UND-Verknüpfung 10. Der Schaltkreis 8 erkennt und signalisiert eine Off-Road-Fahrsituation, d.h. eine Fahrt auf holpriger Fahrbahn, auf Kies, auf Schotter oder dergleichen. Zur Identifizierung einer solchen Fahrbahn-Situation bzw. Geländefahrt werden zweckmäßigerweise, wie hier, die von den Radsensoren abgegebenen und in der Auswerteschaltung 2 berechneten Radsignale analysiert. Das Fahren im Gelände führt zu typischem Raddrehverhalten, zu Raddrehschwingungen, Fahrwerksschwingungen bestimmter Amplitude oder Frequenz oder dergleichen. Der typische Signalverlauf ist von der jeweiligen Fahrwerkskonstruktion abhängig.Es könnte auch Sensor, der Fahrwerksschwingungen oder -beschleunigungen erfaßt, zur Erkennung der Situation "Geländefahrt" Verwendung finden.

Der Eingang El der Zusatzschaltung 7 bzw. der Erkennungsschaltung 8 kann alternativ oder zusätzlich mit einem (nicht dargestellten) manuell betätigbaren Schalter in Verbindung stehen, mit dessen Hilfe der Erkennungsschaltung 8 Off-Road-Betrieb signalisiert werden kann.

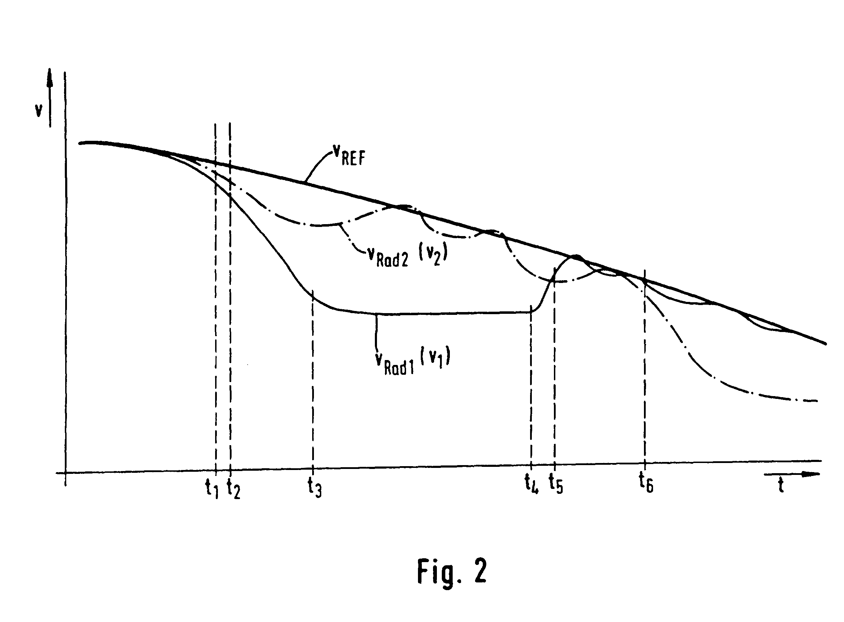

Die zweite Erkennungsschaltung 9 der Zusatzschaltung 7, deren Eingang mit E2 bezeichnet ist, vergleicht die momentane Fahrzeug-Referenzgeschwindigkeit v_{**REF**} mit einer vorgegebenen Fahrzeug-Geschwindigkeitsschwelle V_{G}. Liegt die Fahrzeug-Referenzgeschwindigkeit v_{**REF**} unter dem vorgegebenen Geschwindigkeits-Grenzwert v_{G} und wird Off-Road-Betrieb durch die Schaltung 8 erkannt, wird dies über die UND-Verknüpfung 10 der ABS-Logik 4 signalisiert. In einem gestrichelt abgegrenzten Teil 11 der ABS-Logik 4 - oder in den entsprechenden Programmschritten - wird daraufhin von dem Normalregelungsmodus NRM auf einen "Sonderregelungsmodus SRM" umgeschaltet, wenn die vorgenannten und anschließend anhand der Fig. 2 erläuterten Kriterien bzw. Bedingungen erfüllt sind. Nach Aktivierung dieses Sonderregelungsmodus SRM wird ein Druckabbau bzw. eine Blockierschutzregelung an einem Rad erst nach dem Blockieren des zweiten Rades der jeweiligen Achse zugelassen.

Als Grenzgeschwindigkeit v_{G}, oberhalb der kein Sonderregelungsmodus SRM zugelassen wird oder, wenn SRM bereits eingeleitet war, wieder beendet wird, hat sich ein Wert in der Größenordnung zwischen 15 km/h und 25 km/h, z. B. ein Grenzwert von ca. 20 km/h, als zweckmäßig erwiesen. Bei höherer Fahrzeuggeschwindigkeit, bei der im allgemeinen kein Off-Road-Betrieb vorliegt, wird einer ungehinderten Blockierschutzregelung mit optimaler Lenkfähigkeit und Fahrstabilität der Vorrang eingeräumt.

Fig. 2 zeigt ein Beispiel für den erfindungsgemäßen Regelungseingriff bei einer Off-Road-Fahrsituation. Mit V_{Rad1} und v_{Rad2} ist der Geschwindigkeitsverlauf der beiden Räder einer Achse bezeichnet. v_{**REF**} ist die Fahrzeug-Referenzgeschwindigkeit im betrachteten Bremsvorgang. v_{Rad1}, V_{Rad2} ist mit der Geschwindigkeit v_{**1**} bzw. v_{**2**} im Beispiel nach Fig. 1 identisch.

Die abnehmende Fahrzeug-Referenzgeschwindigkeit v_{**REF**} weist daraufhin, daß es sich um einen Ausschnitt des Bremsgeschehens handelt. In dem betrachteten Regelungsvorgang setzt zum Zeitpunkt tl die Regelung ein, weil das überbremste Rad V_{Rad1} zu diesem Zeitpunkt die vorgegebenen, normalen Regelungsschwellen überschreitet; beispielsweise übersteigt zum Zeitpunkt t₁ die Verzögerung des Fahrzeugrades "Rad1" eine vorgegebene Verzögerungschwelle. Das zweite Rad "Rad2" gelangt etwas später, nämlich zum Zeitpunkt t₂ in die Regelung.

Das Radl hat als erstes die Normal-Regelungsschwelle überschritten. Die Eintrittsbedingungen sind also erfüllt: Das Radl befindet sich im Schlupf und signalisiert zunehmende oder gleichbleibende Radverzögerung. Außerdem befindet sich das Fahrzeug im Gelände bzw. in einer Off-Road-Fahrsituation. Die Fahrzeuggeschwindigkeit oder Fahrzeug-Referenzgeschwindigkeit liegt unter dem Geschwindigkeits-Grenzwert V_{G}. Die Zusatzschaltung 7 nach Fig. 1 signalisiert Off-Road-Betrieb der ABS-Logik 4 bzw. dem für die Sonderregelung zuständigen Schaltungsteil oder Programmteil 11 der ABS-Logik 4. Der Bremsdruck in der Radbremse des Rades 1 wird daher erfindungsgemäß dem Sonderregelungsmodus SRM unterworfen; abweichend von der Normalregelung bzw. dem Normalregelungsmodus wird im Anschluß an t₁ ein Bremsdruckabbau in der Radbremse des Rades 1 unterbunden, so daß, wie Fig. 2 zeigt, der Bremsschlupf und die Verzögerung dieses Rades weiterhin zunehmen. Am zweiten Rad der gleichen Fahrzeugachse - Radverlauf V_{Rad2} - findet eine normale Blockierschutzregelung (NRM) statt.

Etwa zum Zeitpunkt t₃ ändert sich infolge eines Reibwertanstieges die Tendenz des Radverlaufes V_{Rad1}. Die Radverzögerung nimmt ab, bis schließlich zum Zeitpunkt t₄ eine Wiederbeschleunigung des Rades Radl einsetzt. Als Folge des Sonderregelungsmodus SRM wird, sobald eine Wiederbeschleunigung bzw. eine Beschleunigung a_{Rad1} > 0g ermittelt wird, der Bremsdruck in der Radbremse des beobachteten Rades erhöht, so daß in dem dargestellten Ausführungsbeispiel etwa zum Zeitpunkt t₅ eine normale Regelungsschwelle erreicht und überschritten wird. Die Sonderregelung wird daraufhin für das Radl beendet, so daß ab t₅ auch für dieses Rad (Radl) der Normalregelungsmodus wieder gilt.

Erfindungsgemäß wird grundsätzlich zur gleichen Zeit nur für ein Rad einer Achse der Sonderregelungsmodus zugelassen, während für das andere Rad der Normalregelungsmodus gilt. Erst nach dem Zeitpunkt t₅, d.h. nach der Beendigung des Sonderregelungsmodus für das Radl, wird es möglich, das zweite Rad der Achse, wenn die Eintrittsbedingungen erfüllt sind, dem Sonderregelungsmodus SRM zu unterziehen. Diese Situation tritt in dem in Fig. 2 dargestellten Bremsvorgang zum Zeitpunkt t₆ ein. Aus dem Verlauf der strichpunktierten Geschwindigkeitskurve v_{Rad2} des Rades 2 ist erkennbar, daß nunmehr der Sonderregelungsmodus SRM für dieses Rad gilt. Wie zuvor beschrieben, wird folglich ab dem Zeitpunkt t2 ein Bremsdruckabbau in der Radbremse des Rades 2 unterbunden, jedoch das Rad1 dem Normalregelungsmodus unterworfen. Der Sonderregelungsmodus ist also gewissermaßen von dem Radl auf das Rad2 übergegangen, während umgekehrt die Gewährleistung der Lenkfähigkeit und der Fahrstabilität von dem Rad2 auf das Radl übertragen wurde.

Nach dem Zeitpunkt t₅ gilt grundsätzlich, ebenso wie vor dem Zeitpunkt t₁, daß das zuerst die Normalregelungsschwellen überschreitende Rad dem Sonderregelungsmodus, das andere Rad der gleichen Achse dem Normalregelungsmodus unterworfen wird.

Durch das erfindungsgemäße Regelungsverfahren wird also im Gelände bzw. bei einer Off-Road-Situation durch selektives Blockieren jeweils eines Rades einer Achse und Beibehalten der Blockierschutzregelung an dem zweiten Rad der Achse gleichzeitig eine deutliche Verbesserung der Bremsleistung - im Vergleich zur Normalregelung unter diesen Bedingungen - und ein Erhalt der Lenkfähigkeit sowie Fahrstabilität erzielt. Das Blockieren bzw. Einlaufen in relativ hohen Bremsschlupf wird dabei durch Überwachung des Verzögerungsverlaufs dieses Rades beschränkt, um rechtzeitig, so frühzeitig wie möglich, den Sonderregelungsstatus SRM für das betroffene Rad in den Normalregelungsmodus NRM zurückführen zu können. Sobald die Verzögerung des (nahezu) blockierenden Rades abnimmt und eine Wiederbeschleunigung auftritt, wird davon ausgegangen, daß dieses Rad nun dasjenige Rad geworden ist, das den höheren Reibwert aufweist. Der Sonderregelungsmodus geht daher in der beschriebenen Weise auf das andere Rad der Achse über. Dieser Vorgang kann wiederholt wechseln, was insgesamt zu einem entscheidend verbesserten Regelverhalten im Gelände führt und die Fortsetzung der Schlupfregelung, wenn auch eingeschränkt, unter solchen Off-Road-Bedingungen zuläßt.

## Patentansprüche

1. Verfahren zur Verbesserung des Regelverhaltens eines Blokkierschutzregelungssystems (ABS) in einer Off-Road-Fahrsituation, insbesondere beim Fahren auf Kies, Schotter und ähnlichem, bei dem das Drehverhalten der einzelnen Fahrzeugräder gemessen und zur Ermittlung von Eingangsgrößen für die Blockierschutzregelung ausgewertet wird, bei dem im Normalfall bzw. im Normalregelmodus die Blockierschutz-regelung eines Rades einsetzt, sobald dieses Rad vorgegebene Bremsschlupf- und/oder Verzögerungsschwellen (Normal-regelungsschwellen) überschreitet und bei dem beim Erkennen einer Off-Road-Fahrsituation ein Sonderregelungmodus aktiviert wird, dadurch **gekennzeichnet,** daß im Sonderregelungsmodus (SRM) in der Radbremse des Rades (Rad1), das als erstes die vorgegebenen Normal-Regelungsschwellen überschreitet, abweichend von dem Normalregelungsmodus (NRM) ein Bremsdruckabbau unterbunden und der Bremsdruck an diesem Rad (Rad1) solange konstant gehalten wird, bis eine Wiederbeschleunigung dieses Rades einsetzt, daß bei Wiederbeschleunigung dieses Rades (Rad1) eine Bremsdruckerhöhung zugelassen und bei Erreichen der Normal-Regelungsschwellen der Sonderregelungsmodus für dieses Rad beendet wird und daß grundsätzlich zur gleichen Zeit nur für ein Rad einer Achse die Sonderregelung zugelassen wird, während für das andere Rad (Rad2) der Normalregelungsmodus (NRM) gilt.

2. Verfahren nach Anspruch 1, dadurch **gekennzeichnet,** daß als Eintrittsbedingungen für die Sonderregelung (SRM) nach dem Einlaufen eines Rades in die Normalregelung bzw. nach dem Überschreiten der Normalregelungsschwellen das Vorliegen von Bremsschlupf (S ≤ 100 %) und ansteigende oder gleichbleibende Radverzögerung (a_{Rad1n} ≤ a_{Rad1((n-1)}) vorgegeben werden.

3. Verfahren nach Anspruch 1 oder 2, dadurch **gekennzeichnet,** daß der Sonderregelungsmodus (SRM) nur bei einer unter einem vorgegebenen Grenzwert (v_{G}) liegenden Fahrzeug-Geschwindigkeit oder Fahrzeug-Referenzgeschwindigkeit (v_{**REF**} zugelassen wird.

4. Verfahren nach Anspruch 3, dadurch **gekennzeichnet,** daß als Grenzwert (v_{G}) für die Fahrzeug-Geschwindigkeit bzw. Fahrzeug-Referenzgeschwindigkeit (v_{**REF**}) eine Geschwindigkeit in der Größenordnung von 15 km/h bis 25 km/h vorgegeben wird.

5. Verfahren nach einem oder mehreren der Ansprüche 1 bis 4, dadurch **gekennzeichnet,** daß das Vorliegen einer Off-Road-Fahrsituation durch Auswerten von Fahrwerksschwingungen, Radschwingungen, Raddrehschwingungen oder dergleichen, die für einen Off-Road- bzw. Geländebetrieb typisch sind,von den Regelungssystem selbsttätig erkannt wird.

6. Verfahren nach einem oder mehreren der Ansprüche 1 bis 4, dadurch **gekennzeichnet,** daß das Vorliegen einer Off-Road-Fahrsituation durch manuelle Betätigung eines Schalters dem Regelungssystem signalisiert wird.

7. Verfahren nach einem oder mehreren der Ansprüche 1 bis 6, dadurch **gekennzeichnet,** daß grundsätzlich bei einer unter einem vorgegebenen Grenzwert (v_{G}) liegenden Fahrzeug-geschwindigkeit oder Fahrzeug-Referenzgeschwindigkeit der Sonderregelungsmodus (SRM) zugelassen wird.

## Claims

1. Method of improving the control behavior of an anti-lock control system (ABS) in an off-road travel situation, especially when driving on gravel, broken stones, and similar pavements, wherein the rotational behavior of the individual vehicle wheels is measured and evaluated to determine input quantities for anti-lock control operations, wherein in the normal case or in the normal control mode anti-lock control of a wheel commences as soon as this wheel exceeds predetermined brake slip and/or deceleration thresholds (normal control thresholds) and wherein a special control mode is activated when an off-road travel situation is identified,
**characterized** in that in the special control mode (SRM) in the wheel brake of the wheel (Rad1) which is the first to exceed the predetermined normal control thresholds, different from the normal control mode (NRM), braking pressure reduction is prevented and the braking pressure on this wheel (Rad1) is maintained constant until reacceleration of this wheel commences, in that upon reacceleration of this wheel (Rad1) braking pressure increase is permitted and the special control mode for this wheel is terminated when the normal control thresholds are reached, and in that the special control is principally allowed for only one wheel of an axle at a time, and the normal control mode (NRM) applies to the other wheel (Rad2) of the axle.

2. Method as claimed in claim 1,
**characterized** in that the presence of brake slip (S ≤ 100 %) and a rising or constant wheel deceleration (a_{Rad1n} ≤ a_{Rad1(n-1)}) are predetermined as entry conditions for the special control (SRM) after entry of a wheel into normal control or after the normal control thresholds have been exceeded.

3. Method as claimed in claim 1 or claim 2,
**characterized** in that the special control mode (SRM) is admitted only at a vehicle speed or vehicle reference speed (v_{REF}) which is below a predetermined limit value (v_{G}).

4. Method as claimed in claim 3,
**characterized** in that a speed in the order of 15 km/h to 25 km/h is predetermined as a limit value (v_{G}) of the vehicle speed or vehicle reference speed (V_{REF}).

5. Method as claimed in any one or more of claims 1 to 4,
**characterized** in that the existence of an off-road travel situation is automatically identified by the control system by evaluating chassis vibrations, wheel vibrations, wheel rotation vibrations, etc., which are typical of off-road travel conditions.

6. Method as claimed in any one or more of claims 1 to 4,
**characterized** in that the existence of an off-road travel situation is signalled to the control system by manual operation of a switch.

7. Method as claimed in any one or more of claims 1 to 6,
**characterized** in that the special control mode (SRM) is principally allowed at a vehicle speed or vehicle reference speed which is below a predetermined speed limit value (v_{G}).

## Revendications

1. Procédé pour améliorer le comportement de régulation d'un système de régulation d'antiblocage (ABS) dans une condition de conduite hors route, notamment lors d'un déplacement sur des graviers, des cailloux et analogues, selon lequel le comportement de rotation des différentes roues du véhicule est mesuré et est exploité pour la détermination de grandeurs d'entrée pour le système de régulation d'antiblocage, selon lequel, dans le cas normal ou dans le mode de régulation normal, le système de régulation d'antiblocage d'une roue agit dès que la roue dépasse des seuils prédéterminés de glissement de freinage et/ou de décélération (seuils de régulation normaux) et selon lequel, lors de l'identification d'une situation de déplacement hors route, un mode de régulation particulier est activé, caractérisé en ce que dans le mode de régulation particulier (SRM), au niveau du frein de la roue (Rad1) qui la première a dépassé le seuil prédéterminé de régulation normal, une réduction de la pression de freinage est supprimée, d'une manière qui s'écarte du mode de régulation normal (NRM), et la pression de freinage au niveau de cette roue (Rad1) est maintenue constante jusqu'à ce qu'une nouvelle accélération de cette roue se produise, en ce qu'un accroissement de la pression de freinage est autorisé lors d'une nouvelle accélération de cette roue (Rad1) et le mode de régulation particulier pour cette roue est arrêté lorsque les seuils de régulation normaux sont atteints, et en ce qu'en principe au même instant la régulation particulière est autorisée uniquement pour une roue d'un essieu, tandis que le mode de régulation normal (NRM) est valable pour l'autre roue (Rad2).

2. Procédé selon la revendication 1, caractérisé en ce que la présence d'un glissement de freinage (S ≤ 100 %) et une décélération croissante ou constante de roue (a_{Rad1n} ≤ a_{Rad1(n-1)}) sont prédéterminées en tant que conditions d'entrée pour la régulation particulière (SRM) après le passage d'une roue à la régulation normale ou après le dépassement des seuils de régulation normaux.

3. Procédé selon la revendication 1 ou 2, caractérisé en ce que le mode de régulation particulier (SRM) est utilisé uniquement dans le cas où la vitesse du véhicule ou la vitesse de référence du véhicule (v_{REF}) est inférieure à une valeur limite prédéterminée (V_{G}).

4. Procédé selon la revendication 3, caractérisé en ce qu'une vitesse de l'ordre de grandeur de 15 km/h à 25 km/h est prédéterminée en tant que valeur limite (V_{G}) pour la vitesse de référence du véhicule (v_{REF}).

5. Procédé selon une ou plusieurs des revendications 1 à 4, caractérisé en ce que la présence d'une situation de déplacement hors route est identifiée par l'exploitation des oscillations du châssis, des oscillations des roues et des oscillations de rotation des roues ou analogues qui sont typiques d'un déplacement hors route ou tout-terrain.

6. Procédé selon une ou plusieurs des revendications 1 à 4, caractérisé en ce que la présence d'une situation de conduite hors route est signalée au système de régulation au moyen de l'actionnement manuel d'un commutateur.

7. Procédé selon une ou plusieurs des revendications 1 à 6, caractérisé en ce qu'en principe dans le cas où la vitesse du véhicule ou la vitesse de référence du véhicule est inférieure à une valeur limite prédéterminée (V_{G}), le mode de régulation particulier (SRM) est autorisé.
